# EUROPEAN PATENT SPECIFICATION

(11) **EP 1 843 894 B1**
(45) Date of publication and mention of the grant of the patent: **17.12.2014**
(21) Application number: 06710201.2
(22) Date of filing: 27.01.2006
(51) Int. Cl.: B32B 3/12

(54) **STRUCTURAL ELEMENT, ESPECIALLY LAMINATED PANEL AND PROCESS FOR THE MANUFACTURING OF SUCH STRUCTURAL ELEMENT**
BAUELEMENT, BESONDERS LAMINIERTE TAFEL UND VERFAHREN ZUR HERSTELLUNG EINES SOLCHEN BAUELEMENTS
ELEMENT STRUCTUREL, NOTAMMENT, PANNEAU STRATIFIE ET PROCESSUS DE FABRICATION D'UN TEL ELEMENT STRUCTUREL

(30) Priority: 31.01.2005 HU 0500150; 25.01.2006 HU 0600053
(43) Date of publication of application: 17.10.2007
(73) Proprietor: Kompozitor Muanyagipari Fejleszto Kft., 2220 Vecsés (HU)
(72) Inventor: CHEFDEVILLE, Christian, H-1121 Budapest, (HU); KECSKEMÉTHY, Géza, H-1022 Budapest (HU); KOVÁCSAY, István, H-1138 Budapest (HU); ZALÁN, András, H-1098 Budapest (HU)
(74) Representative: Kovari, Zoltan
(86) International application number: PCT/HU2006/000008
(87) International publication number: WO 2006/079860

(56) References cited:
- WO-A-91/09733
- NL-C2- 1 009 856
- US-A- 3 843 486
- US-A- 4 902 565
- US-A- 5 037 498
- US-B1- 6 203 656

## Description

The invention relates to a structural element, especially a laminated panel that has a layer containing cells bordered by stiff lamellas with a fibre-reinforced polymerisable plastic composite cover plate at least on one side mechanically attached with adhesive to the edges of the lamellas, especially a laminated panel with a honeycomb. The invention also relates to a process for manufacturing such structural elements.

Laminated panels are widely used in vehicle industry - for the construction of land, water and air vehicles -, and they are also used in building industry. In the case of a large proportion of well-known laminated structures, on the two external surfaces of the core material with a low density, mass and solidity generally there is a thin load-bearing plate of high solidity fixed to the core material with adhesive of a solidity needed for the transmission of shearing forces. The structure constructed in this way is light, has a high bending stiffness and behaves as a homogenous material with respect to external forces.

Both the internal core and the external load-bearing plates can be made of different materials. For example the core can be made of plastic foam, inorganic foam such as foam glass, low-density wood, or a cell structure of different materials - generally a honeycomb structure - may form the core, while the external load-bearing plate is mostly a metal plate, wood plate, thermoplastic plate or fibre-reinforced thermosetting resin plate.

Generally the load-bearing plates are fixed to the surface of the homogenous core materials by adhesive bonding. Such homogenous cores can be made for example of plastic foams or inorganic foams, balsa wood, etc. A process is also known in the course of which the space between the plates forming the external surfaces is filled with foam, and this foam is bonded to the load-bearing plates directly. According to another solution reinforcing material impregnated with not yet cross-linked resin is applied to the surface of the core material, and it is moulded onto the surface of the core material by exerting pressure and heat.

Laminated panels having the most favourable characteristics from the aspect of solidity, that is panels ensuring the highest bending stiffness with the lowest weight, can be produced by using honeycomb core materials. The material of the honeycomb core can be paper, metal, especially aluminium, stainless steel or titanium, fibre-reinforced plastic, etc.

Laminated panels with honeycomb cores are manufactured by fixing the solid cover plates to the core material with an adhesive, in a way that the adhesive is applied either to the surface of the cover plate, or the edges of the honeycomb panels are dipped in the adhesive, then the cover plate and the honeycomb core are pressed together, and the adhesive is cured mostly by thermosetting. With this procedure laminated panels are mass-produced in vehicle industry; generally honeycomb cores are made of aluminium or stainless steel, and the external layers are made of 0.5-1.5 mm thick aluminium plate, which is fixed to the honeycomb core mostly with a resin-based adhesive. Instead of aluminium plate prefabricated, fibre-reinforced (glass, carbon, Kevlar, stb.) plastic plate - composite - is also used as cover plate, and it is also fixed to the honeycomb core with an adhesive. The used adhesive is almost exclusively some kind of synthetic resin polymer. Such laminated panels with a composite cover plate and a honeycomb core are lighter than panels made of aluminium plates, but their heat resistance is significantly lower, and the bond strength of the adhesive to the prefabricated and set composite plate is not as good as the strength of the adhesive bond between the honeycomb core and the aluminium plate.

Patent specification No. US 6 855 393 relates to a self-bearing fire-proof panel with aluminium honeycomb core, the fire-proof component of which is formed by a 3-12 mm inorganic thermo-expanding layer. The material of this layer is thermo-expanding graphite grain or fibre structure held together by a material that melts on the application of heat. On the external surface of the honeycomb core there is a solid glass-fibre reinforced plastic layer. The insulating layer is laminated, favourably fixed by an adhesive onto one surface of the honeycomb core panel with synthetic resin of the same material.

Patent specification No. US 6 982 020 describes a panel with a stretchable external surface and prefabricated tubular elements, and with an expandable and compressible honeycomb structure.

Patent specification No. US 6 149 971 relates to fire-proof laminated panel, the core material of which is practically aluminium honeycomb, and at least one side of the panel is made of glass-fibre plastic mixed with solvent-free phenol-formaldehyde, in some cases novolac powder. The proportion of synthetic resin and glass fibre is within the range of 5-6 %-100 %. The material is pre-compressed at a temperature of 80-100 °C with a pressure of 1.5-2.0 atm., then the resin is cross-linked at a temperature of 180-220 °C and at a pressure of 1.5-2.0 atm. The laminated panel with an aluminium honeycomb core is made by fixing the set plate to the honeycomb core fore example with polyurethane adhesive.

Patent specification No. US 4 859 517 describes a bendable laminated flat panel with honeycomb core, with cover plates made of perforated metal plate or a net woven from metal fibres. Bending is performed on a compression press.

Patent specification No. US 4 692 367 relates to the elements of stiff mirrors with a low thermal expansion coefficient used for high-energy laser technology, which elements are made of 50% glass and 50% graphite fibre. The elements fixed to each other with glass powder are honeycomb shaped.

Patent specification No. US 5 188 879 describes laminated panels with honeycomb core material the cavities of which are filled with polyamide foam. In the course of manufacturing the panel first a no completely polymerised polyamide-foam plate is made, the metal honeycomb core materials is pressed into it so that the foam fills each cell, and the foam is finally set in the course of subsequent heat treatment. Then a cover plate is fixed to the surfaces, or the metal surface of the honeycomb core is treated with polymer to which the foam will stick.

The common disadvantage of the honeycomb core construction described above is that the strength of the mechanical connection between the honeycomb core and the cover plates is determined exclusively by the adhesive capacity of the adhesive used. This adherence results in a secondary bonding strength. The adherence achieved with adhesives is generally not satisfactory for fibre-reinforced synthetic resin composite plates, the adhesives cannot be fixed to the already cross-linked solid synthetic surfaces satisfactorily, whether they have the same or a different molecule structure. It is known that the subsequent adhesive bonding of already cross-linked synthetic resins, e.g.: epoxy, polyester, phenol, etc., always represents a difficulty, it requires careful surface treatment and also a base coating in many cases. It is especially difficult to fix cover plates made of heat-resistant synthetic resins, such as phenol or furan resin, to the honeycomb core with an adhesive, because set plates made of these types of synthetic resin are even more difficult to fix with an adhesive than plates made of other types of resin. There are no known adhesives that cling well both to set phenol or furan resin surfaces and to the edges of honeycomb lamellas for example made of aluminium, and are also heat-resistant and flameproof.

The task to be solved with the invention is to provide a structural element, especially a laminated panel with a honeycomb structure core - or more generally a layer containing cells bordered by stiff lamellas - and load-bearing external or/and internal cover plates, which is lighter and more solid than the earlier known solutions of a similar nature; and may also be more heat resistant.

The invention is based on the recognition that if the mechanical connection between the cell layer, for example honeycomb core, and the cover plate(s) can be established by achieving higher solidity than in the case of simply fixing them together by an adhesive, the characteristics of the whole structure will significantly improve. We also realised that the above mechanical connection can be improved, if - with respect to the fact that no synthetic resin can be fixed with a chemical bond to already cross-linked synthetic resin, whether they are of the same type or not - instead of or beside the secondary or second-rate bonding strength of the achievable adhesion between the connecting surfaces a chemical bond is created too. The bond between the cell layer, for example honeycomb structure core, and the synthetic resin composite cover plate of high solidity is realised so that instead of a secondary bond the synthetic resin matrix of the plate and the molecules of the adhesive clinging to the core material are united by a chemical bond ensuring the strongest connection. According to our realisation it can be achieved by fixing the honeycomb core and the synthetic resin composite cover plates together in their so-called "B" status, that is before they are completely set, with a polymer-based adhesive clinging with a chemical bond to the material of the partially polymerised (pre-polymerised) resin matrix of the fibre-reinforced cover plates having a synthetic resin matrix.

The invention has a layer containing cells bordered by stiff lamellas and a cover plate fixed to the edges of the lamellas with some adhesive material, and this structural element is characterised by that the cover plate is a fibre-reinforced composite plate, and the edges of the lamellas extend into it keeping a certain distance, and they are connected to the cover plate via a chemical bond realised between its synthetic resin matrix and the adhesive material. Practically the structural element has a layer containing cells bordered by lamellas made of metal, favourably aluminium, but obviously the lamellas can also be made of a material other than metal. Generally the cover plate is made of textile woven or not woven from fibres, impregnated with polymerised plastic material.

In accordance with a further feature of the invention it is constructed as a laminated panel with a honeycomb structure core and with cover plates on two sides of the core connected to the edges of the lamellas with a chemical bond. Although this is expected to be the most common use of the invention, probably there will be other areas of use where there is a cover plate only on one side of the cells, that is the honeycomb core.

In the case of another construction example the structural element according to the invention is constructed as a body with several layers containing cells bordered by stiff lamellas, in which body the neighbouring cell layers are connected with a chemical bond to an intermediate plate functioning as a common internal cover plate. It means that two cell layers are held together by an intermediate plate as a common internal cover plate, and one or even both of the two external open cell surfaces can be sealed with an external cover plate, but a solution is also included in the sphere of protection of the invention in the case of which both free element surfaces remain open cell surfaces.

According to another construction example the fibre-reinforced plastic composite cover plate or/ and intermediate plate and the matrix of the adhesive is epoxy, polyester, vinyl-ester, phenol or furan resin - containing a filler in a given case - or a mixture of them; and the fibres used in the favourably woven or not woven textile are glass, carbon, ceramic or Kevlar fibres.

It may also be favourable, if the cell layer is fixed to the cover plate with expanded adhesive.

The invention also relates to a process for manufacturing a structural element that has a layer containing cells bordered by stiff lamellas with a fibre-reinforced polymerisable plastic composite cover plate at least on one side mechanically attached with adhesive to the edges of the lamellas, especially a laminated panel with a honeycomb structure core, which is based on that the cover plate, while it is still in a partially polymerised, still soft condition, when it can already be handled, is connected to the layer containing cells after the polymer-based adhesive suitable for creating a chemical bond with the synthetic resin matrix of the cover plate has been applied to the connecting surfaces and the edges of said cells being pressed into the cover plate; and the cross-linking of the adhesive and the complete polymerisation of the synthetic resin matrix of the cover plate are realised simultaneously as a result of which a chemical bond is created between the cover plate and the layer containing cells, that is both the adhesive and the matrix of the synthetic resin are cross-linked at the same time until they are completely set. The fibre-reinforced plastic composite cover plate may be woven or not woven textile material impregnated with polymerised plastic bonded to the cell layer - or to the honeycomb structure core in the case of laminated panels - as a soft material that is not sticky any more and feels dry and can be handled, when its resin matrix is in a partially polymerised (pre-polymerised) condition.

According to a favourable realisation of the process the partial polymerisation of the cover plate is realised by tempering and/or by adding a catalytic agent. It is also favourable, if the cover plate and the cell layer, with adhesive applied to their connecting surfaces, are compressed practically in the course tempering for example with stiff, practically heated sheets, realising by this the complete polymerisation of the synthetic resin material of the cover plate and the adhesive at the same time.

In accordance with another feature of the invention the polymer-based adhesive is applied as a continuous layer onto the complete surface of one side of the pre-polymerised cover plate, but it may also be favourable, if the polymer-based adhesive is applied onto the area of the edges of the lamellas of the layer containing cells, practically by dipping the edges into the adhesive.

According to a further realisation of the process, if a laminated panel is made containing a honeycomb structure core with two cover plates, the two cover plates are pressed onto the core simultaneously, by exerting pressure on them, practically in the course of tempering; or, as described above, first one of the cover plates is attached to it, and then, after the complete polymerisation of the cover plate and the adhesive the second plate is attached to the core.

As it has been pointed out above, the cover plate used for manufacturing the structural element is made of textile woven or not woven from fibres, impregnated with polymerised plastic, still soft but not sticky, possible to handle and only partly polymerised. Generally glass, carbon, ceramic or Kevlar fibres are used as reinforcing fibres in the for example woven or not woven textile.

According to a different realisation of the process epoxy, polyester, vinylester, phenol or furan resin or a mixture of them is used as the polymer matrix of the cover plate, containing a filler in a given case and used with their catalytic agents known in themselves.

Generally it is favourable, if a material identical to the polymer matrix of the cover plate is used as an adhesive.

For the purpose of improving the heat-insulating ability of the structural element, for example laminated panel, it may be favourable, if the polymer adhesive is expanded by mixing an expanding agent to it during the period of cross-linking.

In accordance with the above the most important steps of the technology used in the majority of the cases are generally the following:
- a pre-impregnated material, so-called prepreg is made from glass, carbon, Kevlar, etc. reinforcing fibres and from resins and their modifications suitable for this purpose, such as polyester, epoxy, phenol, furan, etc. resins;

- the prepreg is partially polymerised by tempering to reach a condition, in which between the molecules sufficient number of bonds formed for reaching a state of the resin in which it is not fluid any more but it is soft, soluble and fusible (pre-polymerised state). If all possible bonds of molecules formed, the resin comes into an irreversibly solid state (polimerised state);
- polymer-based adhesive is applied onto one of the surfaces of the pre-impregnated material, the material of which adhesive is identical with or different from the material of the prepreg, but is suitable for realising a chemical bond with it; or/and
- the above adhesive is applied onto the edges of the lamellas bordering the cells; the still soft plate created in this way is placed onto the surface of the cell layer;
- between clamping surfaces, by exerting pressure and heat simultaneously, the complete polymerisation of the cover plate and the adhesive is realised at the same time.

Below the invention is described in detail on the basis of the attached drawings showing the general construction of the laminated structure, the traditional connections between the honeycomb core and the cover plate and a few favourable constructions of the laminated structure according to the invention. In the drawings
- figure 1: shows a part of a honeycomb core laminated panel in "exploded" view;
- figure 2: shows a part of a sandwich structure in section, the honeycomb core and cover plates of which are fixed to each other with a traditional adhesive bond;
- figure 3: shows section A as in figure 2, on a larger scale;
- figure 4: shows a construction of the sandwich structure according to the invention in a section at right angles to the cover plates;
- figure 5: shows section B as in figure 4, on a larger scale;
- figures 6 and 7: shows node points similar to figure 5;
- figure 8: shows a multi-layer - multilevel - construction of the sandwich structure according to the invention, in a cross-section at right angles to the cover plates;
- figure 9: shows the setting process of the synthetic resin matrix of the honeycomb-core sandwich structure according to the invention;
- figure 10: shows a structural element according to the invention, the cell layer of which has a cover plate only on one side.

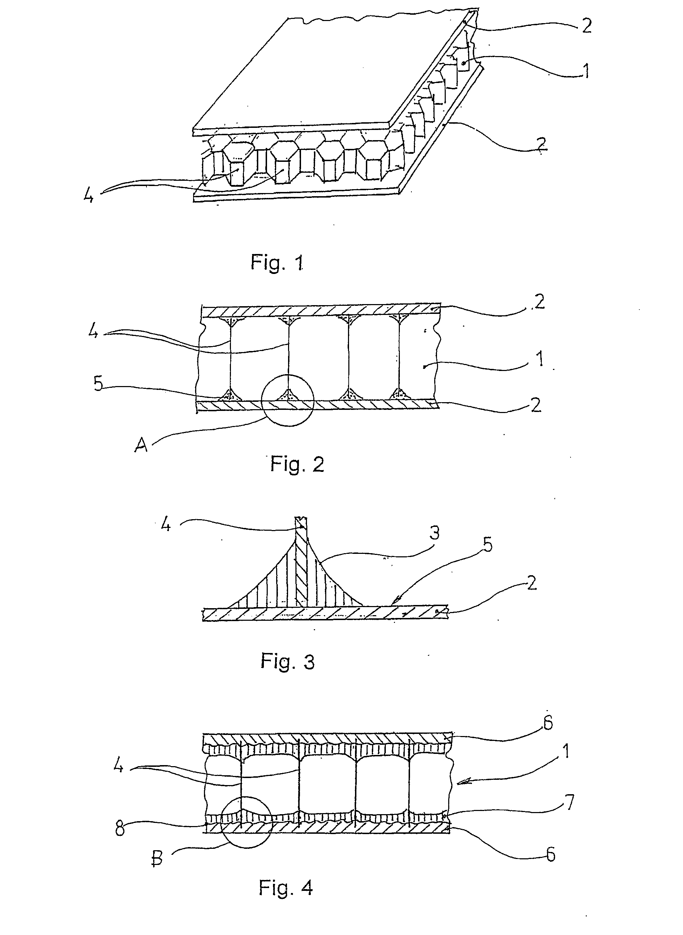

As it can be seen in figures 1-3, in the case of this construction example all laminated elements - known in themselves -, for example laminated panels, have a honeycomb structure core 1 and cover plates 2 sandwiching it on two sides at right angles to the lamellas 4 of the core 1. In this case the cells of the honeycomb core 1 are hexagonal in section. The cover plates 2 - as described above - are made of a hard, solid material with a high load-bearing capacity, and the lamellas 4 forming the walls of the honeycomb cells are also made of a similar material. The mechanical connection between the lamellas 4 and the cover plates 2 touching their edges is ensured by the adhesive 3 applied to these edges. Mechanically it is a weak point of the laminated panels with a honeycomb core, as it is shown in figure 3, where it can be seen that the lamellas 4 of the honeycomb core 1 do not extend into the material of the cover plates 2, they are connected to the core 1 only along the surface of a small drop of adhesive 3. The internal surfaces of the cover plates 2 are hard and perfectly smooth. In respect of the heat resistance of such traditional laminated panels it is a problem that the aluminium cover plates cannot stand the often large heat load of 700 °C, at which point aluminium melts.

The structural element according to the invention overcomes these deficiencies, as we significantly improved for example the mechanical connection between the honeycomb core and cover plates of a laminated panel, and made it possible to use cover plates of a composite material with a greater heat resistance than aluminium.

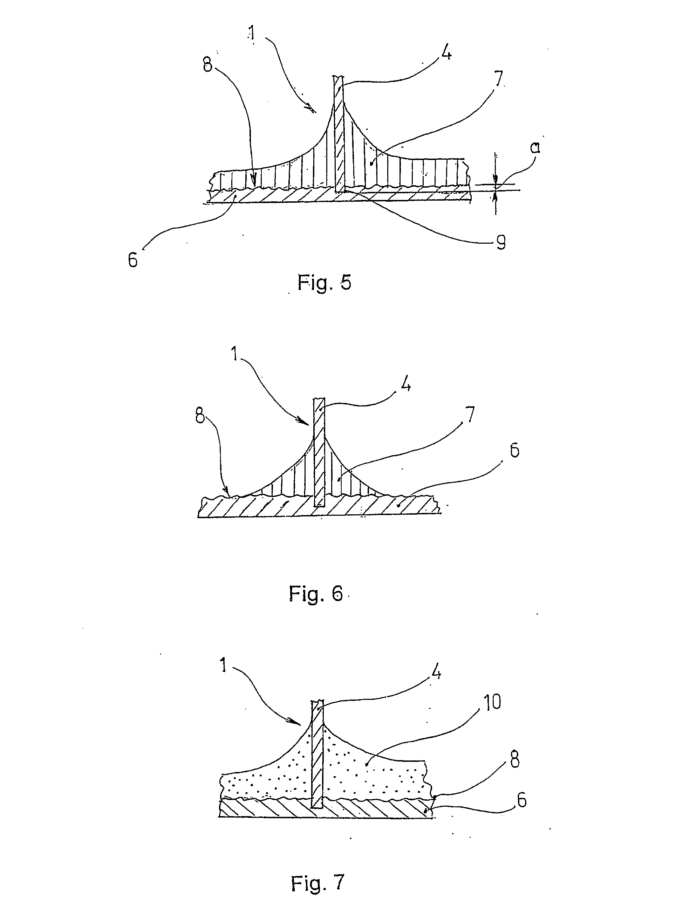

Figure 4 shows a laminated panel - the basic structural construction is the same as the construction shown in figure 1 - in a section at right angles to its cover plates 6. In this case fibre-reinforced plastic composite cover plates 6 were used, and the strength of the connection between the aluminium honeycomb core 1 and the cover plates 6 was increased by connecting the cover plate 6 to the core 1 while its resin matrix was in a not yet completely cross-linked condition, as it is shown in figure 5 on a larger scale. In accordance with this the rough, raw surface 8 of the still soft composite cover plate 6 is coated with an adhesive 7 creating a chemical bond with the material of this cover plate, and the honeycomb core 1 is pressed into this layer, and its lamellas 4 - cell walls - penetrate the adhesive layer and get pressed into the still soft composite cover plate at the point 9 shown in figure 5 keeping a certain distance a - which is only a small part of the thickness of the cover plate -, as a result of which the strength of the mechanical connection created is improved significantly, and obviously in order to achieve this the adhesive 7 needs to be a polymer identical with the material of the composite cover plate 6 polymer, or if it is a different material, it must be able to create a chemical bond with the cover plate 6 matrix. Consequently the resin material of the cover plate can be for example polyester, and the adhesive can be polyester-based or vinylester-based. Epoxy resin can be used both in the cover plate and the adhesive. In order to ensure heat resistance to temperatures over 700 °C for example phenol or furan resin or their mixtures can be used, and the polymer adhesive can also be made of the same resin.

Figure 6 shows a different manufacturing process of the laminated panel shown in figure 4. In accordance with this the honeycomb structure core 1 itself is dipped into the adhesive 7, and then together with the adhesive remaining on the edges of the lamellas 4 of the core 1 the core 1 is pressed into the irregular surface 8 of the still soft composite cover plate 6. In this case too the lamellas 4 extend into the cover plate, and the adhesive 7, in the shape shown in figure 6, creates a stable chemical bond between the cover plate 6 and the core 1.

The manufacturing process of the laminated panel shown in figure 7 is different from the above in that the polymer adhesive 10 used for realising a connection between the core 1 and the cover plate 6 is expanded in the course of curing, for example by mixing an expanding agent known in itself into the material of the adhesive polymer, and in the course of cross-linking it increases the layer thickness of the adhesive 10. As a result of this the adhered surface is increased on the one part, and the heat resistance characteristics of the laminated panel are improved on the other part.

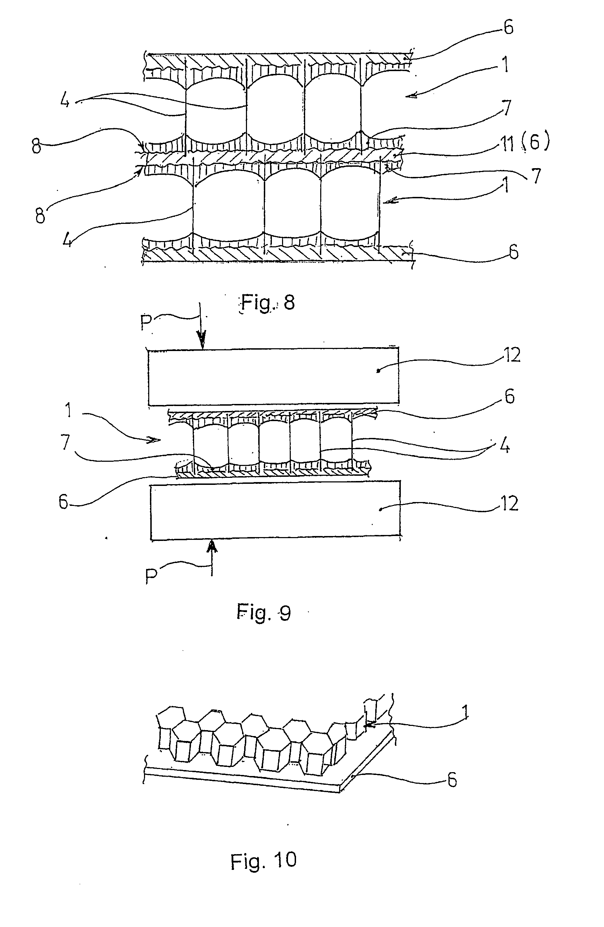

With the process according to the invention multilayer - multilevel - elements with cell layers, such as laminated panels, can also be manufactured as shown in figure 8. In this case the whole laminated panel consists of two parts with a honeycomb core each, which parts have an internal cover plate formed by a common intermediate plate 11 and an external cover plate 6 each; the reference number already used above are used here accordingly to denote the same structural elements and materials. It must be pointed out that the intermediate plate 11 is the cover plate of the two cores 1 - generally speaking the two layers containing the cells bordered by stiff lamellas - at the same time, covering the cells of these layers on their internal side. The significance of such multilevel structural elements, for example laminated panels, is that in the case of external heat effect the lamellas 4 of the honeycomb cores 1 made of metal, mostly aluminium, of good thermal conductivity conduct heat rapidly from one cover plate 6 to the other in the case of single-member laminated panels, but in the case of multilevel laminated panels as shown in figure 8 this heat conduction process is interrupted and significantly reduced by the intermediate plate. It is obvious - and we must emphasise it separately - that structural elements such as the one shown in figure 10, where the cell layer, that is the honeycomb core 1, has a cover plate 6 only on one side, and even structural elements similar to the complex structural element shown in figure 8 are also included in the protection even in the case, when both cover plates 6 are missing, because - as explained above - the intermediate plate 11 functions as an internal cover plate.

Figure 9 shows a possible method of connecting the core 1 and the cover plates 6 of a laminated panel, when these structural units are compressed by force between pressing sheets 12 transferring heat simultaneously, and by this the matrix of the cover plates 6 and the adhesive 7 are cross-linked at the same time.

Below the invention is described in detail on the basis of examples.

### Example 1

A 22 mm thick laminated panel with a honeycomb core and cover plates surrounding it is manufactured with the procedure according to the invention. 330 g/m² of glass cloth consisting of glass fibres with an approximate diameter of 12 microns (Typ. 5342055 Tolnatext) is impregnated with polyester resin (CRYSTIC 199, Scott Bader). As filler 1 weight percent of colloid silica thixotropic additive (HDK T 40, Wacker), as thickener 5 weight percent of magnesium dioxide (Bayer AG), and 10 weight percent of calcium carbonate (CALCITEC M/5, Sacile, Italy) is mixed in the resin.

Directly before impregnation 1.5 weight percent of methyl ethyl ketone peroxide catalytic agent (BUTANOX M50, Akzo Chemie) is added to the mixture. The weight proportion of the glass cloth and the resin mixture is 50-50%.

The glass cloth impregnated in this way is stored at a temperature of 25 °C for 48 hours, during which period the necessary pre-polymerisation takes place.

Adhesive is made from vinylester resin (DERAKANE 411-45, Dow Chemical), and 2 weight percent of colloid silica, 80 weight percent of kaolin (KAOLIN KKA, Lasselsberger a.s.) and 2 weight percent of methyl ethyl ketone peroxide is mixed to it.

The cover plates needed for the panel to be manufactured are cut out from the impregnated glass cloth, and a 1 mm thick adhesive layer is applied onto one side of them with ordinary tools used in synthetic resin industry (figure 5). These two plates prepared in this way are placed on two sides of a honeycomb core. The honeycomb core consists of aluminium lamellas with a thickness of 200 microns, it is hexagonal, and the internal diameter of the cell is 6 mm-s. The honeycomb core is 20 mm high.

The laminated panel prepared in this way are placed between heated pressing sheets. Silicone-treated separating paper (GRILLON 57, Ahltrom Spec) is placed on the pressing sheets. The temperature of the pressing sheets is set at 130 °C. The press is sealed, and the plates coated with an adhesive layer are pressed onto both sides of the honeycomb core using pressure of 150.000 Pa. As a result of the heat and pressure perfect polymerisation takes place both in the plates and in the adhesive. The pressing time is 15 minutes.

### Example 2

The same procedure is followed as in example 1, but in this case for the purpose of improving the heat insulating ability of the laminated panel 4 weight percent of isocyanate-based expanding agent (ONGRONAT CR-30-20, Borsodchem Rt.) is mixed in the adhesive.

### Example 3

The same procedure is followed as in example 1 or 2, except for the method of applying the adhesive. In this case the adhesive is not applied onto the plates cut our from the impregnated glass cloth, but as described in connection with 6, with the help of a suitable applicator a 2 mm thick adhesive layer is applied onto the edges of the lamellas of the honeycomb core, or the honeycomb core is dipped into the adhesive, and the cover plates are pressed together with the core coated with adhesive in this way.

### Example 4

A laminated panel is manufactured using the honeycomb core described in example 1, but the cover plates are prepared as below:

330 g/m² of glass cloth (Typ. 5342055, Tolnatext Bt, Hungary) is impregnated with 50 weight % of phenol resin (LENDAFEN 770, Nafta, Petrochem) filled with silica flour (SILBOND 600 EST, Quarzwerke GmbH), and 0.5 weight % of maleic anhydride is mixed to it. The resin and glass fibre proportion is 55%-45%.

Adhesive is made from the same resin as above, and 30 weight % of talcum (HAICHENG No. 1, Fu Yuan), 1 weight % of paratoluol sulphonic acid, 3 weight % of silica (HDK T 40, Wacker AG) and 15 weight % graphite powder (SPECIAL GRAFIT, Richard Anton KG) is mixed to it.

The impregnated glass cloth is dried at a temperature of 30 °C for 24 hours, while the water content of the resin is partly removed. Then it is stored at 15 °C.

The plate pre-polymerised in this way can be handled and bent. From this point the procedure described in example 1 is followed with the only difference that pressing is performed at a temperature of 150 °C.

### Example 5

A laminated panel of increased heat insulating capacity is manufactured in a way that the procedure described in examples 1 and 4 are followed, but in this case 1 weight % of glass microspheres (K25, 3M) - that is hollow microspheres with a diameter of 50 microns - is mixed to the adhesive, which results in a cellular structure in the resin.

The advantageous effects of the invention are the following:

the quality of the connection between the honeycomb core - the cell layer in general - and the cover plate, tearing strength is increased significantly, even by 30-120% due to the chemical bond. According to our laboratory measurements using the materials stated in example 1, in the case of a laminated panel made by fixing the aluminium honeycomb core to the cover plate completely cured in accordance with the traditional procedure the tearing strength is 20N/10 mm, while in the case of a panel made with the procedure according to the invention - a pre-polymerised cover plate polymerised together with the adhesive - this value is 45N/10 mm.

Due to this very significant increase of the tearing strength the invention makes it possible to use fibre-reinforced (e.g.: glass, carbon, Kevlar, ceramic fibres) plastic composite plates widely in the course of manufacturing high-strength laminated panels. It is known that composite plates have a higher tearing strength than aluminium, but they could not be fixed to the honeycomb core securely using an adhesive - in their completely cured condition as it is performed traditionally -, because completely cured synthetic resin is difficult to fix with an adhesive. The invention eliminates this problem perfectly.

At the same time the use of composite cover plates in the case of honeycomb structure laminated panels results in a significant weight reduction. The result of our concrete comparative measurements was that the weight difference between laminated panels made with 2 x 0.5 mm thick aluminium cover plates and 2 x 0.4 mm thick phenol resin composite cover plates - using the same amount of adhesive - was 900 g/m², and despite the fact that the laminated panel made from synthetic resin composite was lighter, the bending strength of the two different laminated panels was the same.

A further advantage of the invention is that the heat resistance of the laminated panels made with our procedure can be increased. The heat resistance of laminated panels with a honeycomb core is determined by the cover plate and the adhesive used. We performed comparative measurements in this respect too on 200 x 200 x 20 mm laminated panels with a honeycomb core as described in example 1. In the first case the cover plates were made from aluminium, while in the second case they were made from phenol synthetic resin composite.

Both the first and the second panels were tested with jet flame of a temperature of 800 °C to determine their flame-resistance. In the case of the panel with an aluminium cover plate the flame-resistance was 0.5 minutes, while in the case of the panel prepared with the procedure according to the invention it was 8.0 minutes.

Obviously the invention is not restricted to the examples described above, but it can be realised in several other ways within the sphere of protection defined by the claims.

## Claims

1. Structural element that has a layer containing cells bordered by stiff lamellas (4) with a cover plate (6) at least on one side attached with adhesive to the edges of the lamellas (4), **characterised in that** the cover plate (6) is a fibre-reinforced composite plate, and the edges of the lamellas (4) extend into it keeping a certain distance (a), and they are connected to the cover plate (6) via a chemical bond realised between its synthetic resin matrix and the adhesive.

2. Structural element according to claim 1, **characterised in that** it has a layer consisting of cells bordered by lamellas (4) made of metal, favourably aluminium or stainless steel, or fibre-reinforced plastic.

3. Structural element according to claims 1 or 2, **characterised in that** the cover plate (6) is made of textile woven or not woven from fibres, impregnated with polymerised plastic.

4. Structural element according to claims 1-3, **characterised in that** it is constructed as a laminated panel with a honeycomb structure core (1) and with cover plates (6) on two sides of the core (1) connected to the edges of the lamellas (4) with a chemical bond.

5. Structural element according to any of claims 1-4, **characterised in that** it is constructed as a body with several layers containing cells bordered by stiff lamellas, in which body the neighbouring cell layers are connected with a chemical bond to an intermediate plate functioning as a common internal cover plate (11).

6. Structural element according to any of claims 1-5, **characterised in that** the fibre-reinforced plastic composite cover plate (6) or/ and intermediate plate (11) and the matrix of the adhesive is epoxy, polyester, vinyl-ester, phenol or furan resin - containing a filler in a given case - or a mixture of them; and the fibres used in the favourably woven or not woven textile are glass, carbon, ceramic or Kevlar fibres.

7. Structural element according to any of claims 1-6, **characterised in that** the cell layer is fixed to the cover plate (6) with expanded adhesive.

8. Process for manufacturing a structural element that has a layer containing cells bordered by stiff lamellas with a fibre-reinforced polymerisable plastic composite cover plate (6) at least on one side mechanically attached with adhesive to the edges of the lamellas, especially a laminated panel with a honeycomb structure core (1), **characterised in that** the cover plate (6), while it is still in a partially polymerised, still soft condition, when it can already be handled, is connected to the layer containing cells after the polymer-based adhesive (7) suitable for creating a chemical bond with the synthetic resin matrix of the cover plate has been applied to the connecting surfaces and the edges of said cells being pressed into the cover plate; and the cross-linking of the adhesive and the complete polymerisation of the synthetic resin matrix of the cover plate (6) are realised simultaneously, as a result of which a chemical bond is created between the cover plate (6) and the layer containing cells.

9. Process according to claim 8, **characterised in that** the partial polymerisation of the cover plate (6) is realised by tempering and/or by adding a catalytic agent.

10. Process according to claim 8 or 9, **characterised in that** the cover plate (6) and the cell layer, with adhesive applied to their connecting surfaces, are compressed, practically in the course tempering, for example with stiff, practically heated sheets, realising by this the complete polymerisation of the synthetic resin material of the cover plate (6) and the adhesive (7) at the same time.

11. Process according to any of claims 8-10, **characterised in that** the polymer-based adhesive (7) is applied as a continuous layer onto the complete surface (8) of one side of the pre-polymerised cover plate (6).

12. Process according to any of claims 8-11, **characterised in that** the polymer-based adhesive (7) is applied onto the area of the edges of the lamellas (4) of the layer containing cells practically by dipping the edges into the adhesive (7).

13. Process according to any of claims 8-12, **characterised in that** if a laminated panel is made containing a honeycomb structure core (1) with two cover plates (6), the two cover plates (6) are pressed onto the core (1) simultaneously, by exerting pressure on them, practically in the course of tempering; or, as described above, first one of the cover plates (6) is attached to it, and then, after the complete polymerisation of the cover plate (6) and the adhesive the second plate (6) is attached to the core (1).

14. Process according to any of claims 8-13, **characterised in that** the cover plate used is made of textile woven or not woven from fibres, impregnated with polymerisable plastic, still soft but not sticky, possible to handle and only partly polymerised.

15. Process according to any of claims 8-14, **characterised in that** glass, carbon, ceramic or Kevlar fibres are used as reinforcing fibres in the for example woven or not woven textile.

16. Process according to any of claims 8-15, **characterised in that** epoxy, polyester, vinylester, phenol or furan resin or a mixture of them is used as the polymer matrix of the cover plate (6), containing a filler in a given case and used with their catalytic agents known in themselves.

17. Process according to any of claims 8-16, **characterised in that** a material identical to the polymer matrix of the cover plate (6) is used as an adhesive.

18. Process according to any of claims 8-17, **characterised in that** the polymer adhesive is expanded by mixing an expanding agent to it during the period of cross-linking.

19. Process according to any of claims 8-18, **characterised in that** the cell layer used has lamellas made from metal, especially aluminium or stainless steel; or fibre-reinforced plastic.

20. Process according to any of claims 8-19, **characterised in that** several layers of a cellular structure are connected to each other to form one complex structural element by inserting at least one plastic composite intermediate plate (11) reinforced with partially polymerised fibres between the cell layers attached to each other, in a way that the surfaces of this intermediate plate (11) and/or the edges of the lamellas (4) of the cells are coated with polymer adhesive (7) realising a chemical bond with the resin matrix material, and then the cell layers favourably containing at least one cover plate (6) and the intermediate plate (11) are united by pressing favourably combined with heat transfer.

## Patentansprüche

1. Strukturelement, das eine Schicht aufweist, die Zellen enthält, welche von steifen Lamellen (4) eingerahmt sind, mit einer Deckplatte (6), wobei wenigstens eine Seite mit Klebemittel an den Kanten der Lamellen (4) befestigt ist, **dadurch gekennzeichnet, dass** die Deckplatte (6) eine faserverstärkte Kompositplatte ist, und die Kanten der Lamellen (4) sich darin erstrecken, und einen bestimmten Abstand (a) einhalten, und dass sie mit der Deckplatte (6) über eine chemische Verbindung verbunden sind, die zwischen deren Kunstharzmatrix und dem Klebemittel entsteht.

2. Strukturelement nach Anspruch 1, **dadurch gekennzeichnet, dass** es eine Schicht aufweist, die aus Zellen besteht, welche von Lamellen (4) eingerahmt sind, die aus Metall bestehen, bevorzugt aus Aluminium oder Edelstahl, oder faserverstärktem Kunststoff.

3. Strukturelement nach einem der Ansprüche 1 oder 2, **dadurch gekennzeichnet, dass** die Deckplatte (6) aus einem Textil hergestellt ist, das aus Fasern gewoben oder ein Faservlies ist, und mit polymerisiertem Kunststoff imprägniert wurde.

4. Strukturelement nach den Ansprüchen 1 bis 3, **dadurch gekennzeichnet, dass** es als laminierte Platte mit einem Bienenwabenstrukturkern (1) und mit Deckplatten (6) auf zwei Seiten des Kerns (1) konstruiert ist, die durch eine chemische Bindung mit den Kanten der Lamellen (4) verbunden sind.

5. Strukturelement nach einem der Ansprüche 1 bis 4, **dadurch gekennzeichnet, dass** es als Körper mit mehreren Schichten konstruiert ist, die Zellen enthalten, welche von steifen Lamellen eingerahmt sind, wobei die benachbarten in dem Körper Zellschichten durch eine chemische Bindung mit einer Zwischenplatte, die als gewöhnliche innere Deckplatte (11) fungiert, verbunden sind.

6. Strukturelement nach einem der Ansprüche 1 bis 5, **dadurch gekennzeichnet, dass** die faserverstärkte Kunststoffkompositdeckplatte (6) oder/und eine Zwischenplatte (11) und die Matrix des Klebemittels Epoxy-, Polyester-, Vinylester-, Phenol- oder Furanharz ist - das in einem bestimmten Fall ein Füllmittel enthält - oder eine Mischung dieser; und die Fasern, die in diesem bevorzugt gewobenen Textil oder Faservlies verwendet werden, Glas-, Kohlenstoff-, Keramik- oder Kevlarfasern sind.

7. Strukturelement nach einem der Ansprüche 1 bis 6, **dadurch gekennzeichnet, dass** die Zellschicht mit der Deckplatte (6) durch ein Expansionsklebemittel fixiert ist.

8. Verfahren zur Herstellung eines Strukturelementes, das eine Schicht aufweist, die Zellen enthält, die von steifen Lamellen umgeben sind, mit einer faserverstärkten polymerisierbaren Kunststoffkompositdeckplatte (6), die wenigstens auf einer Seite mechanisch mit einem Klebemittel an den Kanten der Lamellen befestigt ist, insbesondere eine laminierte Platte mit einem Bienenwabenstrukturkern (1), **dadurch gekennzeichnet, dass** die Deckplatte (6), während sie sich noch in einem teilweise polymerisierten, immer noch weichen, Zustand befindet, in welchem sie bereits verwendet werden kann, mit der Schicht verbunden wird, welche Zellen enthält, nachdem das Polymer-basierte Klebemittel (7), das zur Bildung einer chemischen Bindung mit der Kunstharzmatrix der Deckplatte geeignet ist, an den verbindenden Oberflächen und den Kanten der Zellen, die in die Deckplatte gepresst werden, angewendet wurde; und die Querverbindung des Klebemittels und die vollständige Polymerisierung der Kunstharzmatrix der Deckplatte (6) gleichzeitig geschehen, wodurch eine chemische Bindung zwischen der Deckplatte (6) und der Schicht, welche die Zellen enthält, entsteht.

9. Verfahren nach Anspruch 8, **dadurch gekennzeichnet, dass** die teilweise Polymerisierung der Deckplatte (6) durch Tempern und/oder durch Hinzufügen eines katalytischen Mittels erfolgt.

10. Verfahren nach Anspruch 8 oder 9, **dadurch gekennzeichnet, dass** die Deckplatte (6) und die Zellschicht, mit einem Klebemittel, das an ihren verbindenden Oberflächen angewendet wurde, komprimiert werden, insbesondere während des Temperns, zum Beispiel mit steifen, praktisch erwärmten Lagen, wobei dadurch die vollständige Polymerisierung des Kunstharzmaterials der Deckschicht (6) und des Klebemittels (7) zur gleichen Zeit erfolgt.

11. Verfahren nach einem der Ansprüche 8 bis 10, **dadurch gekennzeichnet, dass** das Polymer-basierte Klebemittel (7) als durchgängige Schicht auf der kompletten Oberfläche (8) einer der Seiten der vorpolymerisierten Deckplatte (6) angewendet wird.

12. Verfahren nach einem der Ansprüche 8 bis 11, **dadurch gekennzeichnet, dass** das Polymer-basierte Klebemittel (7) auf den Bereich der Kanten der Lamellen (4) der Schicht, welche die Zellen enthält, praktisch durch Tauchen der Kanten in das Klebemittel (7) angewendet wird.

13. Verfahren nach einem der Ansprüche 8 bis 12, **dadurch gekennzeichnet, dass**, wenn eine laminierte Platte hergestellt wird, die einen Bienenwabenstrukturkern (1) mit zwei Deckplatten (6) enthält, wobei die zwei Deckplatten (6) gleichzeitig auf den Kern (1) gepresst werden, indem Druck auf sie ausgeübt wird, praktisch im Zuge des Temperns; oder, wie obenstehend beschrieben, die erste der Deckplatten (6) daran befestigt wird, und dann, nach der vollständigen Polymerisierung der Deckplatte (6) und des Klebemittels, die zweite Platte (6)am Kern (1) befestigt wird.

14. Verfahren nach einem der Ansprüche 8 bis 13, **dadurch gekennzeichnet, dass** die verwendete Deckplatte aus einem aus Fasern gewobenen Textil oder Faservlies besteht, das mit einem polymerisierbaren Kunststoff imprägniert ist, immer noch weich, aber nicht klebrig, das verwendet werden kann und nur teilweise polymerisiert ist.

15. Verfahren nach einem der Ansprüche 8 bis 14, **dadurch gekennzeichnet, dass** Glas-, Kohlenstoff-, Keramik- oder Kevlarfasern als verstärkende Fasern bei dem zum Beispiel gewobenen Textil oder Faservlies verwendet werden.

16. Verfahren nach einem der Ansprüche 8 bis 15, **dadurch gekennzeichnet, dass** ein Epoxy-, Polyester, Vinylester-, Phenol-, oder Furanharz oder eine Mischung dieser als Polymermatrix der Deckplatte (6) verwendet wird, die ein Füllmittel in einem bestimmten Fall enthält und mit deren katalytischen Mitteln, die an sich bekannt sind, verwendet wird.

17. Verfahren nach einem der Ansprüche 8 bis 16, **dadurch gekennzeichnet, dass** ein Material als Klebemittel verwendet wird, das mit der Polymermatrix der Deckplatte (6) identisch ist.

18. Verfahren nach einem der Ansprüche 8 bis 17, **dadurch gekennzeichnet, dass** das Polymerklebemittel durch Beimischen eines Expandierungsmittels während der Quervernetzungszeit expandiert wird.

19. Verfahren nach einem der Ansprüche 8 bis 18, **dadurch gekennzeichnet, dass** die verwendete Zellschicht Lamellen aufweist, die aus Metall hergestellt sind, insbesondere aus Aluminium oder Edelstahl; oder faserverstärktem Kunststoff.

20. Verfahren nach einem der Ansprüche 8 bis 19, **dadurch gekennzeichnet, dass** mehrere Schichten einer zellulären Struktur miteinander verbunden werden, um ein komplexes Strukturelement zu bilden, indem wenigstens eine Kunststoffkompositzwischenplatte (11), die durch teilweise polymerisierte Fasern zwischen den aneinander befestigten Zellschichten verstärkt ist, eingebaut wird, derart, dass die Oberflächen dieser Zwischenplatte (11) und/oder die Kanten der Lamellen (4) der Zellen mit einem Polymerklebemittel (7) beschichtet sind, wodurch eine chemische Bindung mit dem Harzmatrixmaterial realisiert wird, und danach die Zellschichten, die bevorzugt wenigstens eine Deckplatte (6) und die Zwischenplatte (11) enthalten, vereinigt werden, indem auf günstige Art und Weise Druck ausgeübt wird, kombiniert mit einer Wärmeübertragung.

## Revendications

1. Elément structurel qui a une couche contenant des cellules bordées de lamelles rigides (4) avec une plaque de couverture (6) fixée au moins d'un côté par un adhésif aux bords des lamelles (4), **caractérisé en ce que** la plaque de couverture (6) est une plaque composite renforcées de fibres et les bords des lamelles (4) s'y étendent en maintenant une certaine distance (a) et sont raccordés à la plaque de couverture (6) via une liaison chimique réalisée entre sa matrice de résine synthétique et l'adhésif.

2. Elément structurel selon la revendication 1, **caractérisé en ce qu'**il a une couche constituée de cellules bordées de lamelles (4) constituées d'un métal, avantageusement de l'aluminium ou de l'acier inoxydable, ou encore une matière plastique renforcée de fibres.

3. Elément structurel selon la revendication 1 ou la revendication 2, **caractérisé en ce que** la plaque de couverture (6) est constituée d'un textile tissé ou non tissé formé à partir de fibres imprégnées d'une matière plastique polymérisée.

4. Elément structurel selon les revendications 1 à 3, **caractérisé en ce qu'**il est conçu sous la forme d'un panneau stratifié avec un coeur (1) formé d'une structure en nid d'abeilles et avec des plaques de couverture (6) sur deux côtés du coeur (1) raccordés aux bords des lamelles (4) par une liaison chimique.

5. Elément structurel selon l'une quelconque des revendications 1 à 4, **caractérisé en ce qu'**il est conçu sous la forme d'un corps avec plusieurs couches contenant des cellules bordées de lamelles rigides, dans lequel corps les couches de cellules voisines sont raccordées par une liaison chimique à une plaque intermédiaire jouant le rôle d'une plaque de couverture interne commune (11).

6. Elément structurel selon l'une quelconque des revendications 1 à 5, **caractérisé en ce que** la plaque de couverture composite (6) en matière plastique renforcée de fibres et/ou la plaque intermédiaire (11) et la matrice de l'adhésif sont formés d'une résine d'époxyde, de polyester, d'ester vinylique, de phénol ou de furanne - contenant une charge dans un cas donné - ou un mélange de celles-ci ; et les fibres utilisées dans le textile avantageusement tissé ou non tissé sont formées de fibres de verre, de carbone, de céramique ou de Kevlar.

7. Elément structurel selon l'une quelconque des revendications 1 à 6, **caractérisé en ce que** la couche de cellules est fixée à la plaque de couverture (6) par un adhésif expansé.

8. Procédé de fabrication d'un élément structurel qui a une couche contenant des cellules bordées de lamelles rigides avec une plaque de couverture (6) formée d'un composite de matière plastique polymérisable renforcée de fibres mécaniquement fixée au moins d'un côté par un adhésif aux bords des lamelles, en particulier un panneau stratifié avec un coeur (1) formé d'une structure en nid d'abeilles, **caractérisé en ce que** la plaque de couverture (6), tandis qu'elle est encore dans un état en partie polymérisé, encore mou, où elle peut déjà être manipulée, est raccordée à la couche contenant des cellules après que l'adhésif à base polymère (7) convenant à la création d'une liaison chimique avec la matrice de résine synthétique de la plaque de couverture a été appliqué aux surfaces de raccordement et que les bords desdites cellules ont été pressées dans la plaque de couverture ; et la réticulation de l'adhésif et la complète polymérisation de la matrice de résine synthétique de la plaque de couverture (6) sont réalisées simultanément à la suite de quoi une liaison chimique est créée entre la plaque de couverture (6) et la couche contenant les cellules.

9. Procédé selon la revendication 8, **caractérisé en ce que** la polymérisation partielle de la plaque de couverture (6) est réalisée par trempage et/ou par addition d'un agent catalytique.

10. Procédé selon la revendication 8 ou la revendication 9, **caractérisé en ce que** la plaque de couverture (6) et la couche de cellules, avec l'adhésif appliqué à leurs surfaces de raccordement, sont comprimées, en pratique au cours de leur trempage, par exemple avec des feuilles rigides chauffées en pratique, en réalisant ainsi la polymérisation complète du matériau de résine synthétique de la plaque de couverture (6) et de l'adhésif (7) en même temps.

11. Procédé selon l'une quelconque des revendications 8 à 10, **caractérisé en ce que** l'adhésif à base de polymère (7) est appliqué sous la forme d'une couche continue sur la surface complète (8) d'un côté de la plaque de couverture pré-polymérisée (6).

12. Procédé selon l'une quelconque des revendications 8 à 11, **caractérisé en ce que** l'adhésif à base de polymère (7) est appliqué sur la zone des bords des lamelles (4) de la couche contenant les cellules en pratique en immergeant les bords dans l'adhésif (7).

13. Procédé selon l'une quelconque des revendications 8 à 12, **caractérisé en ce que**, si l'on forme un panneau stratifié contenant un coeur (1) formé d'une structure en nid d'abeilles avec deux plaques de couverture (6), les deux plaques de couverture (6) sont pressées sur le coeur (1) simultanément en exerçant une pression sur celles-ci en pratique au cours du trempage ; ou, comme décrit ci-dessus, la première des plaques de couverture (6) lui est fixée et, ensuite, après la polymérisation complète de la plaque de couverture (6) et de l'adhésif, la seconde plaque (6) est fixée au coeur (1).

14. Procédé selon l'une quelconque des revendications 8 à 13, **caractérisé en ce que** la plaque de couverture utilisée est constituée de textile tissé ou non tissé formé de fibres imprégnées d'une matière plastique polymérisable, encore molle mais pas collante, aisée à manipuler et seulement en partie polymérisée.

15. Procédé selon l'une quelconque des revendications 8 à 14, **caractérisé en ce que** des fibres de verre, de carbone, de céramique ou de Kevlar sont utilisées comme fibres de renfort dans le textile par exemple tissé ou non tissé.

16. Procédé selon l'une quelconque des revendications 8 à 15, **caractérisé en ce que** l'on utilise une résine d'époxyde, d'ester vinylique, de phénol ou de furanne ou encore un mélange de celles-ci comme matrice polymère de la plaque de couverture (6) contenant une charge dans un cas donné et utilisées avec leurs agents catalytiques connus en soi.

17. Procédé selon l'une quelconque des revendications 8 à 16, **caractérisé en ce que** l'on utilise comme adhésif un matériau identique à la matrice polymère de la plaque de couverture (6).

18. Procédé selon l'une quelconque des revendications 8 à 17, **caractérisé en ce que** l'adhésif polymère est expansé en y mélangeant un agent d'expansion au cours de la période de réticulation.

19. Procédé selon l'une quelconque des revendications 8 à 18, **caractérisé en ce que** la couche de cellules a des lamelles faites d'un métal, en particulier de l'aluminium ou de l'acier inoxydable ; ou encore d'un matériau plastique renforcé de fibres.

20. Procédé selon l'une quelconque des revendications 8 à 19, **caractérisé en ce que** plusieurs couches d'une structure cellulaire sont raccordées l'une à l'autre pour former un élément structurel complexe en insérant au moins une plaque intermédiaire de composite plastique (11) renforcée de fibres en partie polymérisées entre les couches de cellules fixées l'une à l'autre, de manière que les surfaces de cette plaque intermédiaire (11) et/ou les bords des lamelles (4) des cellules soient revêtus d'adhésif polymère (7) assurant une liaison chimique avec le matériau de la matrice de résine et qu'ensuite les couches de cellules contenant avantageusement au moins une plaque de couverture (6) et la plaque intermédiaire (11) soient unies par pression avantageusement combinée à un transfert thermique.
